# EUROPEAN PATENT SPECIFICATION

(11) **EP 1 419 809 B1**
(45) Date of publication and mention of the grant of the patent: **07.11.2007**
(21) Application number: 03026242.2
(22) Date of filing: 14.11.2003
(51) Int. Cl.: B01D 35/16, B01D 29/96

(54) **Filter with removable filter element and drain mechanism**
Filtrierungsvorrichtung mit Wechselfiltereinsatz und Entleerungsvorrichtung
Filtre avec élément filtrant remplaçable et mécanisme de vidange

(30) Priority: 15.11.2002 JP 2002332864
(43) Date of publication of application: 19.05.2004
(73) Proprietor: Toyoda Boshoku Corporation, Kariya-shi, Aichi-ken, 448-8661 (JP); Denso Corporation, Kariya-city, Aichi-pref. 448-8661 (JP)
(72) Inventor: Okuda, Masami, Ama-gun Aichi-ken, 490-1222 (JP); Takahara, Toshihiro, Kariya-shi Aichi-ken, 448-8651 (JP); Fukumori, Sadahito, Kariya-shi Aichi-ken, 448-8651 (JP)
(74) Representative: TBK-Patent

(56) References cited:
- US-A1- 2002 020 660
- PATENT ABSTRACTS OF JAPAN vol. 1997, no. 05, 30 May 1997 (1997-05-30) -& JP 09 010515 A (NIPPONDENSO CO LTD), 14 January 1997 (1997-01-14)
- PATENT ABSTRACTS OF JAPAN vol. 1998, no. 09, 31 July 1998 (1998-07-31) & JP 10 109006 A (DENSO CORP), 28 April 1998 (1998-04-28) -& EP 0 839 563 A (DENSO CORP) 6 May 1998 (1998-05-06)

## Description

### FIELD OF THE INVENTION

The present invention relates to a drain mechanism of an element replacement type filter according to claim 1 and to an element replacement type filter according to claim 5, comprising said drain mechanism.

The present invention is widely used, for example, in an oil filter for filtering foreign materials, abraded powders, carbons and the like mixing into an oil lubricating an internal combustion engine, a fuel filter and a relevant field thereto.

### DESCRIPTION OF PRIOR ART

Conventionally, as a drain mechanism of an element replacement type filter, there has been known, for example, a structure in which a housing is constituted by a cap and a case attachable and detachable with each other, a drain valve opening and closing a drain hole formed in the cap is provided, and a spring member energizing the drain valve in a direction of opening the drain hole is arranged between the drain valve and the cap (for example, refer to JP-10-109006 A.

Accordingly, when loosening the cap with respect to the case so as to cancel the engagement between both the parts at a time of replacing the elements, the drain valve is displaced in a direction of opening the drain hole on the basis of an operation of the spring member, and the drain hole is automatically opened. Therefore, it is possible to discharge the oil stored within the housing from the drain hole under the open state, prior to the replacing work of the element.

However, in the conventional drain mechanism mentioned above, a filter element is fitted to an element supporting portion formed in the drain valve. In other words, the filter element is directly supported to the drain valve. Accordingly, when a high pressure is applied to the filter element at a time of starting an internal combustion engine or the like, the drain valve becomes bumpy together with the filter element. As a result, there is a risk that a so-called oil scraping phenomenon such that the oil within the housing leaks due to reduction in a closing property (a liquid tightness) of the drain hole achieved by the drain valve, is generated.

US 2002/0020660 A1 discloses a generic drain mechanism of an element replacement type filter. The drain mechanism of the element replacement type filter comprises a drain valve closing a drain hole formed in a cap of a housing constituted by a case and the cap engageable with the case, an element supporting body displaceable along an opening and closing direction of the drain hole, and suitable for supporting a filter element received in the housing; and a valve pressing elastic means for energizing the drain valve in a direction of closing the drain hole, in a state in which the cap and the case are engaged, thereby preventing a liquid leakage from the drain hole. Further, the valve pressing elastic means is interposed between the drain valve and an upper supporting element of the element of supporting body. J 09 010 515 A dicloses a similar type of drain mechanism of an element replacement type filter.

### SUMMARY OF THE INVENTION

It is an object of the present invention to further develop a drain mechanism of an element replacement type filter according to the preamble of claim 1 such that the drain mechanism of an element replacement type filter obtains the effect of inhibiting the drain valve from being bumpy.

This object is achieved by a drain mechanism of an element replacement type filter having the features of claim 1.

Advantageous further developments are defined in the dependent claims.

In accordance with the drain mechanism of the element replacement type filter on the basis of the present invention, at a time of canceling the engagement between the cap and the case, the drain valve is displaced on the basis of an operation of the valve opening elastic means and the drain hole is automatically opened. Accordingly, it is possible to discharge the liquid (for example, the oil or the like) stored within the housing from the drain hole, prior to a replacing work of the filter element or the like.

Further, under the engaged state between the cap and the case, the filter element is supported to the element supporting body independently provided from the drain valve, and the drain valve is pressed in the direction of closing the drain hole on the basis of the operation of the valve pressing elastic means. Accordingly, even in the case that the high pressure is applied to the filter element and the element supporting body is bumpy, the bumpy condition exerts no bad influence on the drain valve, and it is possible to prevent the liquid leakage from the drain hole.

Further, in the case that the valve pressing elastic means is arranged between the element supporting body and the drain valve, the bumpy condition can be absorbed by the valve pressing elastic means even if a high pressure is applied to the filter element and the element supporting body is bumpy, so that it is possible to more securely close the drain hole by the drain valve which is pressed by the operation of the valve pressing elastic means.

Further, in the case that the valve opening elastic means is arranged between the element supporting body and the cap, it is possible to preferably displace the drain valve on the basis of the operation of the valve opening elastic means.

Further, in the case that the element supporting body has the engagement portion capable of engaging with the engaged portion provided in the drain valve, the engagement portion of the element supporting body and the engaged portion of the drain valve are not in contact with each other, under the engaged state between the cap and the case, and on the other hand, the engagement portion of the element supporting body and the engaged portion of the drain valve are engaged at a time of canceling the engagement between the cap and the case, so that the drain valve is integrally displaced together with the element supporting body. Accordingly, it is possible to provide a drain mechanism having a compact and simple structure which can more securely prevent the liquid from leaking from the drain hole.

In accordance with the element replacement type filter on the basis of the present invention, at a time of canceling the engagement between the cap and the case, the drain valve is displaced on the basis of the operation of the valve opening elastic means and the drain hole is automatically opened. Accordingly, it is possible to discharge the liquid (for example, the oil or the like) stored within the housing from the drain hole, prior to the replacing work of the filter element or the like.

Further, under the engaged state between the cap and the case, the filter element is supported to the element supporting body independently provided from the drain valve, and the drain valve is pressed in the direction of closing the drain hole on the basis of the operation of the valve pressing elastic means. Accordingly, even when the high pressure is applied to the filter element and the element supporting body is bumpy, the bumpy condition exerts no bad influence on the drain valve, and it is possible to prevent the liquid from leaking from the drain hole.

### MODE FOR CARRYING OUT THE INVENTION

The "housing" mentioned above is not particularly limited in a material, a shape, a size and the like thereof as far as it is constituted by a cap and a case which can be engaged and disengaged with each other. As an engaging and disengaging mechanism between the cap and the case, for example, there can be listed up (1) a screwing mechanism constituted by male and female screw portions which can be screwed with each other, (2) a bayonet mechanism constituted by a groove portion and a convex portion which can be engaged and disengaged with each other, and the like. Further, an inflow port for taking in a liquid from an external portion and an outflow port for delivering the liquid to the external portion are normally formed in the case. Further, a drain hole for discharging the liquid within the housing to the external portion is normally provided in the cap.

The "drain valve" mentioned above is not particularly limited in a material, a shape, a size and the like thereof as far as it can open and close the drain hole. The drain valve is normally arranged in an inner side of the cap.

The "element supporting body" mentioned above is not particularly limited in a structure, a material, a shape and the like thereof as far as it is an independent body from the drain valve and it can support the filter element. The element supporting body can, for example, have an engagement portion which can engage with the engaged portion provided in the drain valve. In this case, it is preferable that under the engaged state between the cap and the case, the engagement portion of the element supporting body is not in contact with the engaged portion of the drain valve, and on the other hand, the engagement portion is engaged with the engaged portion and the element supporting body and the drain valve are integrally displaced, at a time of canceling the engagement between the cap and the case.

Further, the wordings "not in contact" mentioned above means, for example, a state in which the engagement portion of the element supporting body and the engaged portion of the drain valve oppose to each other at a predetermined interval (normally between 0.4 and 2.8 mm).

The "valve opening elastic means" mentioned above is not particularly limited in a structure, an installation aspect, a material and the like thereof as far as it can displace the drain valve mentioned above. As the valve opening elastic means, there can be listed up, for example, an elastic member such as a rubber, a spring or the like, a buffering mechanism, and the like. As the spring, there can be listed up, for example, a coil spring, a conical spring, a leaf spring and the like. The valve opening elastic means can be arranged, for example, between the cap and the drain valve. In view of obtaining a more compact and simple structure, it is preferable that the valve opening elastic means is arranged between the cap and the element supporting body.

The "valve pressing elastic means" mentioned above is not particularly limited in a structure, an installation aspect, a material and the like thereof as far as it can press the drain valve mentioned above. As the valve pressing elastic means, there can be listed up, for example, an elastic member such as a rubber and a spring or the like, a buffering mechanism, and the like. As the spring, there can be listed up, for example, a coil spring, a conical spring, a leaf spring and the like. The valve pressing elastic means can be arranged, for example, between the cap and the drain valve. In view of obtaining a more compact and simple structure, it is preferable that the valve pressing elastic means is arranged between the drain valve and the element supporting body.

In this case, the wordings "at a time of canceling the engagement between the cap and the case" means a time when the cap and the case relatively move apart from each other along an opening and closing direction of the drain hole.

Further, the "drain mechanism" mentioned above is preferably structured, for example, such that the element supporting body is provided so as to freely displace along the opening and closing direction of the drain valve with respect to the cap, the drain valve is provided so as to freely displace along the opening and closing direction of the drain valve with respect to the element supporting body, the valve opening elastic means is arranged between the element supporting body and the cap, and the valve pressing elastic means is arranged between the drain valve and the element supporting body.

Further, the "element replacement type filter" mentioned above can be provided, for example, with a filter element received in the housing mentioned above.

### BRIEF DESCRIPTION OF THE DRAWINGS

Fig. 1 is a cross sectional view showing an entire structure of an oil filter in accordance with the present embodiment in a used state;
Fig. 2 is an enlarged view of a main portion in Fig. 1;
Fig. 3 is an enlarged cross sectional view of a main portion of an oil filter in an oil discharging state (an oil eluting state); and
Fig. 4 is a cross sectional view showing an entire structure of an oil filter in accordance with another embodiment in a state in which a case and a cap are separated.

### DESCRIPTION OF THE PREFERRED EMBODIMENT

A particular description will be given below of the present invention on the basis of an embodiment with reference to the accompanying drawings. In this case, in the present embodiment, an element replacement type filter is exemplified by an oil filter attached to a cylinder block (not shown) of an internal combustion engine.

### (1) Structure of oil filter

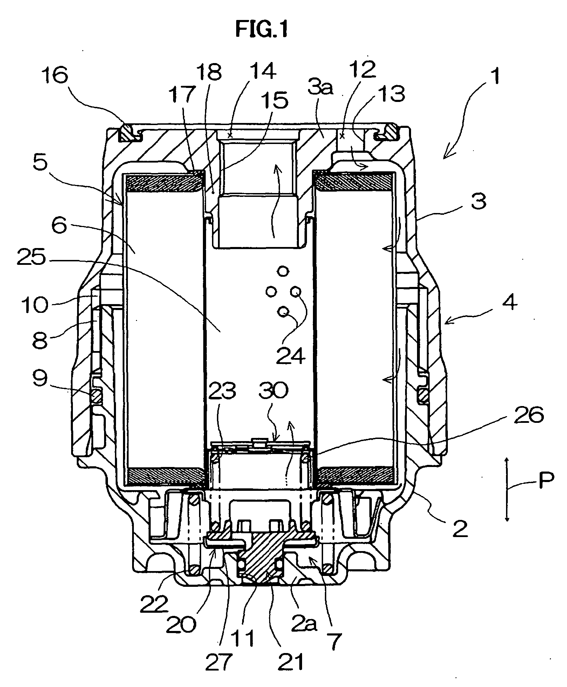

An oil filter 1 in accordance with the present embodiment is basically provided, as shown in Fig. 1, with a housing 4 constituted by a closed-end tubular cap 2 and a case 3 which can be engaged with and disengaged from each other, an element assembly 5 received within the housing 4 and a drain mechanism 7. A male screw portion 8 is formed on an outer peripheral surface near an opening portion of the cap 2, and an O-ring 9 is attached to the outer peripheral surface near an opening portion of the cap 2. Further, a female screw portion 10 is formed on an inner peripheral surface near an opening portion of the case 3. When screwing the male screw portion 8 with the female screw portion 10 so as to engage the cap 2 with the case 3 via the O-ring 9, an inner portion of the housing 4 is held in a liquid tight manner. Further, a drain hole 11 for automatically discharging the oil is formed in a center of a bottom portion 2a in the cap 2.

In this case, the element assembly 5 has a filter element 6 formed by folding a filter paper.

A plurality of oil inflow ports 12 and oil inflow passages 13 for taking in the oil from a side of an internal combustion engine are formed in a bottom portion 3a of the case 3. Further, an oil outflow passage 15 and an oil outflow port 14 for delivering the oil filtered by the filter element 6 to the side of the internal combustion engine are formed in a center of a bottom portion 3a in the case 3. Further, a rubber gasket 16 is attached to the bottom portion 3a of the case 3 in a periphery of the oil inflow port 12, and when the case 3 is attached to a mounting seat (not shown) of a cylinder block in the internal combustion engine, both the elements are held in a liquid-tight manner. Further, a cylindrical protecting portion 18 to which an upper end opening portion of the element assembly 5 is fitted via a seal member 17 is formed in an inner side of the bottom portion 3a in the case 3.

In this case, the structure may be made such that a check valve is provided in the oil inflow passage 13 of the case 3, thereby preventing the oil from flowing back at a time when an operation of the internal combustion engine is stopped or the like.

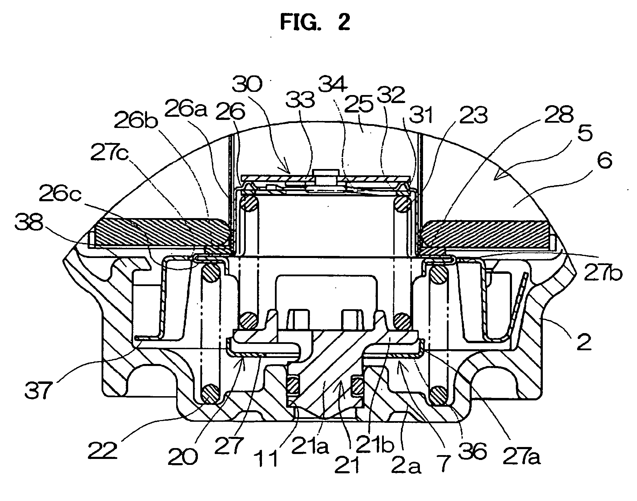

Next, a description will be given of the drain mechanism 7 mentioned above. The drain mechanism 7 is basically provided, as shown in Fig. 2, with an element supporting body 20 supporting an element assembly 5, a drain valve 21 capable of opening and closing the drain hole 11, a coil spring 22 for opening a drain valve 21, and a coil spring 23 for pressing the drain valve 21.

The element supporting body 20 mentioned above has a cylindrical protector member 25 in which a lot of communication holes 24 are formed on an outer peripheral surface, and upper and lower supporting members 26 and 27 formed in a hat shape in accordance with a sheet metal working. Further, the element supporting body 20 is provided along an opening and closing direction P of the drain hole 11 so as to be freely displaceable. A lower end opening portion of the protector member 25 is welded on an outer peripheral surface of a tubular portion 26a in the upper supporting member 26, and a lower end opening portion of the element assembly 5 is fitted thereto via a seal member 28. Further, the upper and lower supporting members 26 and 27 are integrally fixed on the basis of an engagement between a hook portion 26c and a hole portion 27c in a state in which respective collar portions 26b and 27b are brought into contact with each other.

A relief valve 30 is provided in an upper end side of the tubular portion 26a of the upper supporting member 26. In other words, an upper end side of the tubular portion 26a in the upper supporting member 26 is formed as a valve seat 31, and a valve body 33 is mounted on the valve seat 31 so as to close an opening portion 32. The valve body 33 is energized in a direction of closing the opening portion 32 on the basis of an effect of a spring member 34. In this relief valve 30, when a filtering capacity of the filter element 6 is extremely lowered and a pressure of the soiled oil is increased to be equal to or more than a predetermined value, the valve body 33 is displaced against the spring member 34 and the opening portion 32 of the valve seat 31 is opened.

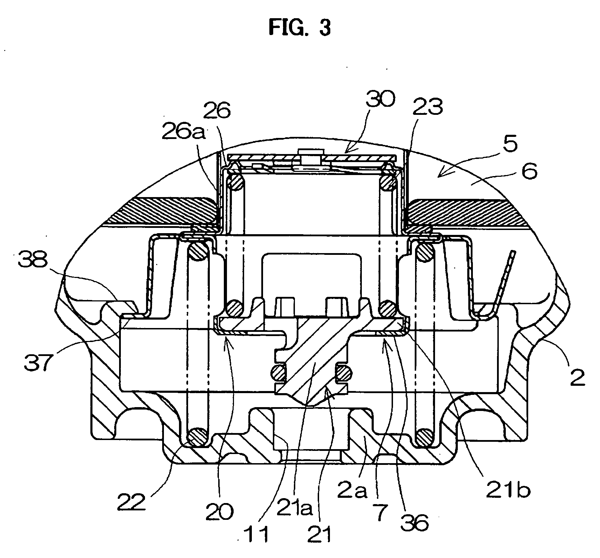

Further, the drain valve 21 is provided within the tubular portion 27a of the lower supporting member 27 so as to freely displace along the opening and closing direction P of the drain hole 11. A pressing coil spring 23 for energizing the drain valve 21 in a direction of closing the drain hole 11 (a lower side in the drawing) in a state in which the cap 2 and the case 3 are completely engaged, is interposed between an expanded portion 21b of the drain valve 21 and the upper supporting member 26. Further, the lower supporting member 27 is provided with a valve receiving portion 36 (exemplified as an engagement portion) opposing to the expanded portion 21b (exemplified as an engaged portion) of the drain valve 21 with keeping a predetermined interval. Further, a regulating piece portion 37 connected to an outer side of the collar portion 27b of the lower supporting member 27 is formed in the lower supporting member 27. A come-off prevention of the element supporting body 20 with respect to the cap 2 is achieved by bringing the regulating piece portion 37 of the lower supporting member 27 into contact with a regulating portion 38 formed in the cap 2 (refer to Fig. 3). Further, an opening coil spring 22 for energizing the element supporting body 20 in a direction of opening the drain hole 11 (toward an upper side in the drawing) is interposed between the collar portion 27b of the lower supporting member 27 and the bottom portion 2a of the cap 2.

### (2) Operation of oil filter

Next, a description will be given of an operation of the oil filter 1.

First, a description will be given of an operation of the oil filter 1 attached to the cylinder block of the internal combustion engine under a used state. As shown in Fig. 2, in the case that the filter element 6 has a sufficient filtering capacity, in the operated state of the internal combustion engine, the opening portion 32 of the valve seat 31 is closed by the valve body 33 owing to the spring member 34, in the relief valve 30. Further, as shown by a solid arrow in Fig. 1, the soiled oil taken into the housing 4 from the side of the internal combustion engine via the oil inflow port 12 and the oil inflow passage 13 is filtered through the filter element 6 so as to become a clean oil. Thereafter, the clean oil is delivered to the side of the internal combustion engine through an inner portion of the protector member 25 via the oil outflow passage 15 and the oil outflow port 14.

At this time, the drain valve 21 is pressed in a direction of closing the drain hole 11 on the basis of the operation of the pressing coil spring 23. Further, the expanded portion 21b of the drain valve 21 and the valve receiving portion 36 of the lower supporting member 27 are opposed with keeping a predetermined interval, and the drain valve 21 and the element supporting body 20 are made in a state in which they are connected only by the pressing coil spring 23. Accordingly, even in the case that the high pressure is applied to the filter element 6 and the element supporting body 20 is bumpy, at a time of starting the operation of the internal combustion engine, the bumpy condition is absorbed by the pressing coil spring 23, no bad influence is exerted on the drain valve 21, and the drain hole 11 closed by the drain valve 21 exhibits a good liquid-tightness.

Further, when the filtering capacity of the filter element 6 is extremely lowered, and the pressure of the soiled oil is increased up to a predetermined value or more, the valve body 33 of the relief valve 30 displaces against the energizing force of the spring member 34, and the opening portion 32 of the valve seat 31 is opened. The soiled oil is delivered to the side of the internal combustion engine through the opening portion 32 in the opened state (shown by an imaginary arrow in Fig. 1) via the oil outflow passage 15 and the oil outflow port 14 further through the inner portion of the protector member 25, without passing through the filter element 6.

Next, a description will be given of an operation of the oil filter 1 at a time of replacing the element. First, the engagement between the male and female screw portions 8 and 10 of both the members 2 and 3 are loosened by rotating the cap 2 with respect to the case 3 by the worker while using the tool or manually, and the cap 2 is moved gradually apart from the case 3 along an axial direction. First, the element supporting body 20 is displaced in a direction of opening the drain hole 11 with respect to the cap 2 (in the upper direction in the drawing) on the basis of the operation of the opening coil spring 22. Further, in the middle of the displacement of the element supporting body 20, the valve receiving portion 36 of the lower supporting member 27 is brought into contact with the expanded portion 21b of the drain valve 21 so as to be engaged, and thereafter, the element supporting body 20 and the drain valve 21 are integrally displaced. Further, when the valve portion 21a of the drain valve 21 slips out from the drain hole 11 and the drain hole 11 is set in the opened state, as shown in Fig. 3, the oil stored within the housing 4 is discharged from the drain hole 11 in the open state.

Thereafter, when further rotating the cap 2 with respect to the case 3 so as to completely cancel the engagement state between the male and female screw portions 8 and 10, the cap 2 is separated from the case 3. At this time, the upper end opening portion of the element assembly 5 slips out from the protecting portion 18 of the case 3, and on the other hand, the lower end opening portion of the element assembly 5 is kept attached to the tubular portion 26a of the upper supporting member 26. Accordingly, the element assembly 5 is separated from the case 3 together with the element supporting body 20, and can be easily replaced by the worker.

In this case, in the embodiment mentioned above, the description is given of the operation at a time of replacing the element assembly 5, however, the operation is not limited to this case. For example, the same operation is carried out in a replacing work of the O-ring 9 provided in the outer periphery of the cap 2.

### (3) Effect of embodiments

As mentioned above, in accordance with the present embodiments, since the opening coil spring 22 is arranged between the element supporting body 20 and the cap 2, the lower supporting member 27 constituting the element supporting body 20 is provided with the valve receiving portion 36 brought into contact with the expanded portion 21b of the drain valve 21 so as to be engageable, and the drain hole 11 is opened by displacing the drain valve 21 together with the element supporting body 20 on the basis of the operation of the opening coil spring 22 at a time of canceling the engagement state between the case 3 and the cap 2, it is possible to automatically open the drain hole 11 prior to the replacing work of the element assembly 5, the O-ring 9 and the like, and it is possible to discharge the oil stored in the inner portion of the housing 4.

Further, in the present embodiment, the pressing coil spring 23 is arranged between the element supporting body 20 and the drain valve 21, and the drain valve 21 is pressed in the direction of closing the drain hole 11 in the state in which the case 3 and the cap 2 are completely engaged. Accordingly, even in the case that the high pressure is applied to the filter element 6 at a time of starting the operation of the internal combustion engine and the element supporting body 20 is bumpy, the bumpy condition is absorbed by the operation of the pressing coil spring 23, no bad influence is exerted to the drain valve 21, the drain hole 11 can be closed in the liquid-tight manner by the drain valve 21, and it is possible to securely prevent the oil from leaking from the drain hole 11.

In this case, in the present invention, the structure is not limited to the embodiments mentioned above, and can employ variously modified embodiments within the scope of the present claims.

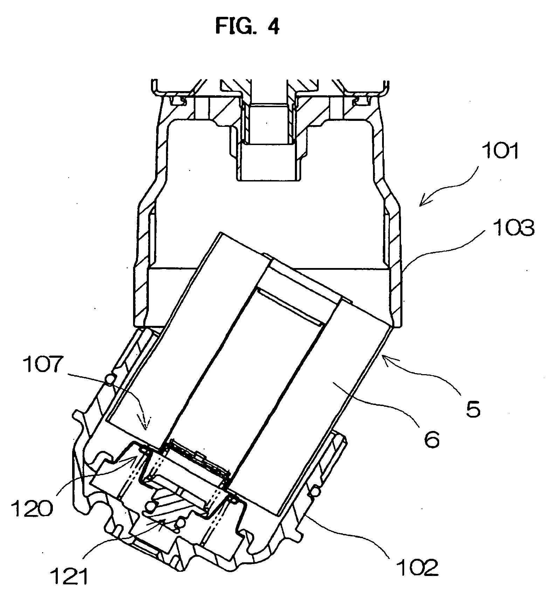

In other words, the structure may be made such that an oil filter 101 is provided with a cap 102, a case 103, an element supporting body 120, a drain valve 121 and the like having different outer shapes from those of the embodiment mentioned above (refer to Fig. 4). A leading end surface of the drain valve 121 is formed in a flat shape. The oil filter 101 is provided with a drain mechanism 107 having approximately the same structure of that of the embodiment mentioned above. Further, in the present embodiment, there is exemplified the oil filter 1 attached to the cylinder block of the internal combustion engine, however, the structure is not limited to this, and the present invention may be applied to a fuel filter, for example.

The invention provides an element replacement type filter which can prevent an oil from leaking from a drain hole, even in the case that a high pressure is applied to a filter element, and a drain mechanism of the same. A present drain mechanism 7 of the invention corresponds to a drain mechanism which displaces a drain valve 21 on the basis of an operation of a valve opening elastic means (an opening coil spring 22) so as to automatically open the drain hole 11 at a time of canceling an engagement between a cap 2 and a case 3. The drain mechanism is provided with an element supporting body 20 independently provided from the drain valve and supporting a filter element 6 received in a housing 4, and a valve pressing elastic means (a pressing coil spring 23) for energizing the drain valve in a direction of closing a drain hole, in an engaged state between the cap and the case.

## Claims

1. A drain mechanism (7) of an element replacement type filter comprising:
a drain valve (21; 121) closing a drain hole (11) formed in a cap (2; 102) of a housing (4) constituted by a case (3; 103) and said cap (2; 102) engageable with said case (3; 103);
an element supporting body (20; 120) displaceable along an opening and closing direction (P) of the drain hole (11), and suitable for supporting a filter element (6) received in said housing (4);
a valve pressing elastic means (23) for energizing said drain valve (21; 121) in a direction of closing said drain hole (11), in a state in which said cap (2; 102) and said case (3; 103) are engaged, thereby preventing a liquid leakage from said drain hole (11); and
wherein the valve pressing elastic means (23) is interposed between the drain valve (21; 121) and an upper supporting element (26) of the element supporting body (20; 120),
**characterized in that** the drain mechanism (7) comprises:
a valve opening elastic means (22) which displaces said drain valve (21; 121) to open said drain hole (11), at a time of cancelling an engagement between said case (3; 103) and said cap (2; 102),
wherein the element supporting body (20; 120) opens the drain valve (21; 121) on the basis of the operation of the valve opening elastic means (22) interposed between the cap (2; 102) and a lower supporting member (27) of the element supporting body (20; 120).

2. A drain mechanism (7) of an element replacement type filter as claimed in claim 1, wherein said valve pressing elastic means (23) is arranged between said element supporting body (20; 120) and said drain valve (21; 121).

3. A drain mechanism (7) of an element replacement type filter as claimed in claim 1 or 2, wherein said valve opening elastic means (22) is arranged between said element supporting body (20; 120) and said cap (2; 102).

4. A drain mechanism (7) of an element replacement type filter as claimed in any one of claims 1 to 3, wherein an engagement portion (36) of the element supporting body (20; 120) is capable of engaging with said engaged portion (21b) of said drain valve (21; 121), at a time of cancelling the engagement between said cap (2; 102) and said case (3; 103), said engagement portion (36) of said element supporting body (20; 120) not being in contact with said engaged portion (21b) of said drain valve (21; 121), in an engaged state between said cap (2; 102) and said case (3; 103).

5. An element replacement type filter comprising a drain mechanism (7) as claimed in any one of claims 1 to 4, and said housing (4) receiving said drain mechanism (7).

## Patentansprüche

1. Ablassmechanismus (7) eines Filters mit austauschbarem Element, mit
einem Ablassventil (21; 121), das ein Ablassloch (11) schließt, das in einem Deckel (2; 102) eines Gehäuses (4) ausgebildet ist, das durch ein Gehäusebauteil (3; 103) und den Deckel (2; 102) gebildet wird, der mit dem Gehäusebauteil (3; 103) eingreifbar ist;
einem Elementstützaufbau (20; 120), der entlang einer Öffnungs- und Schließrichtung (P) des Ablasslochs (11) verschiebbar ist und ein Filterelement (6) stützen kann, das in dem Gehäuse (4) aufgenommen ist;
einer elastischen Ventildrückeinrichtung (23) zum Drängen des Ablassventils (21; 121) in die Schließrichtung des Ablasslochs (11) in einem Zustand, in dem der Deckel (2; 102) und das Gehäusebauteil (3; 103) in Eingriff sind, wodurch verhindert wird, dass eine Flüssigkeit aus dem Ablassloch (11) tritt; und
wobei die elastische Ventildrückeinrichtung (23) zwischen dem Ablassventil (21; 121) und einem oberen Stützelement (26) des Elementstützaufbaus (20; 120) angeordnet ist,
**dadurch gekennzeichnet, dass** der Ablassmechanismus (7) Folgendes aufweist:
eine elastische Ventilöffnungseinrichtung (22), die das Ablassventil (21; 121) zu einem Zeitpunkt des Aufhebens eines Eingriffs zwischen dem Gehäusebauteil (3; 103) und dem Deckel (2; 102) verschiebt, um das Ablassloch (11) zu öffnen,
wobei der Elementstützaufbau (20; 120) das Ablassventil (21; 121) auf der Grundlage der Betätigung der elastischen Ventilöffnungseinrichtung (22) öffnet, die zwischen dem Deckel (2; 102) und einem unteren Stützbauteil (27) des Elementstützaufbaus (20; 120) angeordnet ist.

2. Ablassmechanismus (7) eines Filters mit austauschbarem Element nach Anspruch 1, wobei die elastische Ventildrückeinrichtung (23) zwischen dem Elementstützaufbau (20; 120) und dem Ablassventil (21; 121) angeordnet ist.

3. Ablassmechanismus (7) eines Filters mit austauschbarem Element nach Anspruch 1 oder 2, wobei die elastische Ventilöffnungseinrichtung (22) zwischen dem Elementstützaufbau (20; 120) und dem Deckel (2; 102) angeordnet ist.

4. Ablassmechanismus (7) eines Filters mit austauschbarem Element nach einem der Ansprüche 1 bis 3, wobei ein Eingriffsabschnitt (36) des Elementstützaufbaus (20; 120) mit einem eingreifenden Abschnitt (21b) des Ablassventils (21; 121) zu einem Zeitpunkt des Aufhebens des Eingriffs zwischen dem Deckel (2; 102) und dem Gehäusebauteil (3; 103) in Eingriff gebracht werden kann, wobei in einem Eingriffszustand zwischen dem Deckel (2; 102) und dem Gehäusebauteil (3; 103) der Eingriffsabschnitt (36) des Elementstützaufbaus (20; 120) mit dem eingreifenden Abschnitt (21b) des Ablassventils (21; 121) nicht in Kontakt ist.

5. Filter mit austauschbarem Element mit einem Ablassmechanismus (7) nach einem der Ansprüche 1 bis 4 und dem Gehäuse (4), das den Ablassmechanismus (7) aufnimmt.

## Revendications

1. Mécanisme de vidange (7) d'un filtre du type à élément remplaçable comprenant :
une soupape de vidange (21 ; 121) fermant un orifice de vidange (11) formé dans un bouchon (2 ; 102) d'un logement (4) formé par un carter (3 ; 103) et ledit bouchon (2 ; 102) engageable audit carter (3 ; 103) ;
un corps support d'élément (20 ; 120) déplaçable suivant une direction d'ouverture et de fermeture (P) de l'orifice de vidange (11), et adapté à soutenir un élément filtrant (6) reçu dans ledit logement (4) ;
un moyen élastique presse-soupape (23) pour solliciter ladite soupape de vidange (21 ; 121) dans une direction de fermeture dudit orifice de vidange (11), dans un état où ledit bouchon (2 ; 102) et ledit carter (3 ; 103) sont en prise, empêchant ainsi une fuite de fluide dudit orifice de vidange (11) ; et
dans lequel le moyen élastique presse-soupape (23) est intercalé entre la soupape de vidange (21 ; 121) et un élément de soutien supérieur (26) du corps support d'élément (20 ; 120),
**caractérisé en ce que** le mécanisme de vidange (7) comprend :
un moyen élastique ouvre-soupape (22) pour déplace ladite soupape de vidange (21 ; 121) de façon à ouvrir l'orifice de vidange (11), au moment d'annuler l'engagement entre ledit carter (3 ; 103) et ledit bouchon (2 ; 102),
dans lequel le corps support d'élément (20 ; 120) ouvre la soupape de vidange (21 ; 121) sur la base du fonctionnement du moyen élastique ouvre-soupape (22) intercalé entre le bouchon (2 ; 102) et un élément de soutien inférieur (27) du corps support d'élément (20 ; 120).

2. Mécanisme de vidange (7) d'un filtre du type à élément remplaçable selon la revendication 1, dans lequel ledit moyen élastique presse-soupape (23) est placé entre ledit corps support d'élément (20 ; 120) et ladite soupape de vidange (21 ; 121).

3. Mécanisme de vidange (7) d'un filtre du type à élément remplaçable selon la revendication 1 ou 2, dans lequel ledit moyen élastique ouvre-soupape (22) est placé entre ledit corps support d'élément (20 ; 120) et ledit bouchon (2 ; 102).

4. Mécanisme de vidange (7) d'un filtre du type à élément remplaçable selon l'une quelconque des revendications 1 à 3, dans lequel une partie d'engagement (36) du corps support d'élément (20 ; 120) est capable d'entrer en prise avec ladite partie engagée (21b) de ladite soupape de vidange (21 ; 121), au moment d'annuler l'engagement entre ledit bouchon (2 ; 102) et ledit carter (3 ; 103), ladite partie d'engagement (36) dudit corps support d'élément (20 ; 120) n'étant pas au contact de ladite partie engagée (21b) de ladite soupape de vidange (21 ; 121), dans un état engagé entre ledit bouchon (2 ; 102) et ledit carter (3 ; 103).

5. Filtre du type à élément remplaçable comprenant un mécanisme de vidange (7) selon l'une quelconque des revendications 1 à 4, et ledit logement (4) recevant ledit mécanisme de vidange (7).
